# EUROPÄISCHE PATENTSCHRIFT

(11) **EP 1 395 414 B1**
(45) Veröffentlichungstag und Bekanntmachung des Hinweises auf die Patenterteilung: **08.10.2008**
(21) Anmeldenummer: 02778863.7
(22) Anmeldetag: 06.06.2002
(51) Int. Cl.: B29C 47/58, B29B 17/00, B29C 47/10, B29C 47/78, B29C 47/92

(54) **VORRICHTUNG ZUR BEFÜLLUNG EINER IN EINEM GEHÄUSE GELAGERTEN SCHNECKE UND VERFAHREN ZUM BETRIEB EINER SOLCHEN VORRICHTUNG**
DEVICE FOR CHARGING A SCREW LODGED IN A HOUSING AND METHOD FOR OPERATING A DEVICE OF THIS TYPE
DISPOSITIF DE CHARGEMENT D'UNE VIS SANS FIN LOGEE DANS UN BATI, ET PROCEDE PERMETTANT DE FAIRE FONCTIONNER UN TEL DISPOSITIF

(30) Priorität: 11.06.2001 AT 9022001
(43) Veröffentlichungstag der Anmeldung: 10.03.2004
(73) Patentinhaber: BACHER, Helmut, A-4490 St. Florian (AT); SCHULZ, Helmuth, 4020 Linz (AT); Wendelin, Georg, 4033 Linz (AT)
(72) Erfinder: BACHER, Helmut, A-4490 St. Florian (AT); SCHULZ, Helmuth, 4020 Linz (AT); Wendelin, Georg, 4033 Linz (AT)
(74) Vertreter: Wildhack, Helmut
(86) Internationale Anmeldenummer: PCT/AT2002/000171
(87) Internationale Veröffentlichungsnummer: WO 2002/100624

(56) Entgegenhaltungen:
- EP-A- 0 749 818
- WO-A-00/64654
- WO-A-01/39948
- US-A- 5 217 800
- PATENT ABSTRACTS OF JAPAN vol. 016, no. 063 (C-0911), 18. Februar 1992 (1992-02-18) & JP 03 260187 A (KEIICHI MATSUSE), 20. November 1991 (1991-11-20)

## Beschreibung

Die Erfindung bezieht sich auf eine Vorrichtung zur Befüllung einer in einem Gehäuse gelagerten Schnecke, insbesondere eines Extruders, zur Aufbereitung von vorzerkleinertem Kunststoffgut, wobei die Befüllungsöffnung des Schneckengehäuses mit der unteren Auslauföffnung eines stehenden vakuumdichten Aufnahmebehälters für das zu bearbeitende Gut in Strömungsverbindung steht, und wobei im Aufnahmebehälter durch einen Antrieb um eine, insbesondere vertikale, Achse umlaufende Werkzeuge vorgesehen sind, welche auf das in den Aufnahmebehälter von oben durch eine Schleuse eingebrachte Gut einwirken. Weiters bezieht sich die Erfindung auf ein Verfahren zum Betrieb einer solchen Vorrichtung.

Eine Vorrichtung der eingangs geschilderten Art ist den Anmeldern aus der Praxis als Vakuumtrichter für Spritzguss- oder Extrusionsmaschinen bekannt. Eine solche Konstruktion ist aber nicht für alle Kunststoffarten zielführend einsetzbar, insbesondere nicht für solche Kunststoffsorten, welche eine längere Verweilzeit im Aufnahmebehälter erfordern, wie PET (Polyethylenterephthalat), z.B. Mahlgut aus Flaschen, Flaschenvorformlingen, Folien oder Platten. Dieses Gut ist in der Regel nicht vorkristallisiert und benötigt eine bestimmte Temperatur und homogene Verteilung, bevor es in das Schneckengehäuse zur Plastifizierung eingebracht wird. **Derartige Vorrichtungen sind beispielsweise aus der** WO 00/64654 **bekannt.**

Die Erfindung setzt sich zur Aufgabe, eine Vorrichtung der eingangs beschriebenen Art so zu verbessern, dass den zuvor genannten Anforderungen entsprochen wird, d.h. dass solche spezielle Kunststoffsorten, insbesondere PET-Mahlgut, so im Aufnahmebehälter behandelt wird, dass das Gut mit der gewünschten homogenen Beschaffenheit in die Befüllungsöffnung des Schneckengehäuses eingebracht wird. Die Erfindung löst diese Aufgabe dadurch, dass im Aufnahmebehälter im Mittelbereich der Höhe desselben zumindest ein zur Erzeugung einer Mischtrombe rasch umlaufendes Werkzeug zwischen einem oberen Innenraumteil und einem unteren Innenraumteil des Aufnahmebehälters angeordnet ist, wobei im oberen Innenraumteil das behandelte Kunststoffgut, insbesondere PET, in Form der Mischtrombe unter Energieeinbringung umläuft, wogegen der untere Innenraumteil einen Verweilraum für das in ihn gelangte erwärmte Kunststoffgut zwecks thermischer Homogenisierung desselben bildet, wobei in diesem Verweilraum umlaufende Werkzeuge als reine Mischwerkzeuge ohne wesentliche Energieeinbringung zur Vermeidung eines Zusammenbackens des Kunststoffgutes ausgebildet sind. Die Erfindung geht hierbei von der Erkenntnis aus, dass es schwierig ist, das im Aufnahmebehälter behandelte Gut mit einer gleichmäßigen Verweilzeit durch die untere Auslauföffnung des Aufnahmebehälters der Schnecke zuzuführen. Versuche haben nun ergeben, dass diese Schwierigkeit dadurch überwunden werden kann, dass im oberen Bereich des Aufnahmebehälters die zur Erreichung des gewünschten Temperaturbereiches des Gutes erforderliche Energie durch die in diesem Abschnitt umlaufenden Werkzeuge relativ rasch erreicht werden kann. Diese über die umlaufenden Werkzeuge einzubringende Energie ist im unteren Bereich des Aufnahmebehälters durch die dort weniger intensive Bearbeitung kleiner, was dazu beiträgt, Überhitzungen des Gutes zu vermeiden, obwohl das bearbeitete Gut im unteren Innenraumteil des Aufnahmebehälters zumeist eine beträchtliche Verweilzeit verbringt. Diese Verweilzeit gewährleistet eine gute thermische Homogenität des in das Schneckengehäuse eintretenden Gutes und damit eine gute Qualität des von der Schnecke der weiteren Verarbeitung, z.B. eines Extruders, zugeführten Gutes. Je länger die durchschnittliche Verweilzeit des Gutes im Aufnahmebehälter ist, desto geringer ist die Wahrscheinlichkeit, dass ein nicht ausreichend vorgewärmtes bzw. getrocknetes bzw. vorkristallisiertes Kunststoffteilchen in das Schneckengehäuse gelangt, was unerwünscht ist. Die im unteren Aufnahmebehälterbereich geringe Wirkung der dort angeordneten Werkzeuge trägt auch dazu bei, das umgerührte Gut ohne Schwierigkeiten, insbesondere ohne Klumpenbildung durch Zusammenbacken, der Befüllungsöffnung des Schneckengehäuses zuzuführen, die zweckmäßig unmittelbar an das Auslaufende des Aufnahmebehälters angeschlossen ist, in Sonderfällen jedoch damit auch über einen Stutzen verbunden sein kann. Die Evakuierbarkeit des Aufnahmebehälters gewährleistet eine bessere Trocknung eines gegebenenfalls feuchten Gutes und hält den Luftsauerstoff vom vorgewärmten Gut, insbesondere PET, fern, so dass dieses Material in der gewünschten Weise vorkristallisiert und ein hoher Vorkristallisationswert erreicht werden kann. Auf die beschriebene Weise lässt sich auch feuchtes Kunststoffmaterial (Feuchtigkeitsgehalt bis etwa 5 %) verarbeiten, da im oberen Innenraumteil des Behälters die für die Trocknung erforderliche höhere Mehrleistung problemlos einbringbar ist, ohne dass die Gefahr einer inhomogenen Bearbeitung des Kunststoffgutes besteht.

Gemäß einer Weiterbildung der Erfindung sitzt das im Mittelbereich des Aufnahmebehälters umlaufende Werkzeug auf der Oberseite einer Scheibe, deren Rand in geringem Abstand von der Innenwand des Aufnahmebehälters liegt. Im Rahmen der Erfindung beträgt dieser Abstand zumindest 20 mm. Durch diesen Abstand wird rings um den Rand der Scheibe eine ringförmige Durchlassöffnung für das im oberen Innenraumteil des Aufnahmebehälters bearbeitete Kunststoffgut geschaffen, durch welche dieses Gut nach und nach aus dem oberen Innenraumteil in den unteren Innenraumteil des Behälters gelangen kann. Der günstigste Abstand für die Bildung dieses Ringspaltes hängt ab von der Art des bearbeiteten Kunststoffgutes und auch vom Grad der Zerkleinerung desselben. Je größer die Dichte des verarbeiteten Gutes ist, desto kleiner kann die Größe des erwähnten Ringspaltes sein. Um sich an unterschiedliche Verhältnisse anpassen zu können, ist es im Rahmen der Erfindung zweckmäßig, wenn die Größe des Abstandes einstellbar ist, was konstruktiv durch geeignete Verstellung von Randabschnitten der Scheibe problemlos durchführbar ist.

Die Einleitung des im Aufnahmebehälter befindlichen, bearbeiteten Gutes in die Einzugsöffnung des Schneckengehäuses wird erleichtert, wenn der Aufnahmebehälter einen oberen zylindrischen Abschnitt und einen unteren konischen Abschnitt hat, der sich bis zur Befüllungsöffnung des Schneckengehäuses verjüngt. Eine solche Bauweise hat auch den Vorteil, dass die im konischen Abschnitt des Aufnahmebehälters angeordneten Werkzeuge von oben nach unten immer kürzer werden, sodass bei Aufrechterhaltung einer ausreichenden Rührwirkung die Energieeinbringung in das bearbeitete Gut vernachlässigbar klein wird. Es ist hierbei vorteilhaft, wenn im Rahmen der Erfindung das die Mischtrombe erzeugende Werkzeug im Bereich des oberen Endes des konischen Abschnittes angeordnet ist, da dies die Ausbildung der Mischtrombe durch die geneigten Wandabschnitte begünstigt.

Es hat sich herausgestellt, dass günstige Verhältnisse der Höhe des zylindrischen Abschnittes zur Höhe des konischen Abschnittes im Bereich zwischen 3 : 1 und 1 : 3 liegen.

Die im unteren Innenraumteil des Aufnahmebehälters angeordneten Werkzeuge sind, wie erwähnt, reine Mischwerkzeuge. Dies kann auch für die die Mischtrombe im oberen Innenraumteil des Aufnahmebehälters erzeugenden Werkzeuge gelten, da eine Zerkleinerung des ohnedies zumeist im vorzerkleinerten Zustand in den Aufnahmebehälter eingebrachten Kunststoffgutes in der Regel nicht erforderlich ist. Falls gewünscht, kann jedoch zumindest ein im oberen Abschnitt des Aufnahmebehälters angeordnetes Werkzeug als Zerkleinerungswerkzeug ausgebildet, vorzugsweise mit Schneiden versehen, sein, insbesondere wenn solche Zerkleinerungswerkzeuge von der die beiden Innenraumteile des Behälters trennenden Scheibe getragen sind.

Konstruktiv ist es günstig, den vakuumdichten Aufnahmebehälter oben durch einen Deckel abzuschließen, der eine Öffnung für die Einbringung des Gutes hat, an die eine Kammer angeschlossen ist, die oben und unten durch vakuumdicht schließende Ventile, insbesondere Schieber, abschließbar ist und an die eine Evakuierungsleitung angeschlossen ist, wobei eine zusätzliche Evakuierungsleitung an den Aufnahmebehälter angeschlossen ist. Diese Kammer wirkt als evakuierbare Schleuse für das in den Aufnahmebehälter einzubringende Gut, sodass kein Luftsauerstoff beim Befüllen in den Aufnahmebehälter gelangt. Der Deckel kann dazu ausgenützt werden, den Antrieb, insbesondere einen regelbaren Antrieb, und gegebenenfalls auch ein Getriebe, für die Werkzeuge zu tragen. Ein solcher Antrieb ermöglicht es, die Drehzahl der Werkzeuge zu verändern und dadurch an die jeweils vorliegenden Gegebenheiten anzupassen. Eine feinere Einstellung gewünschter Arbeitsbedingungen im Aufnahmebehälter ergibt sich gemäß einer Weiterbildung der Erfindung dadurch, dass die im unteren Abschnitt des Aufnahmebehälters angeordneten Werkzeuge und die im oberen Abschnitt des Aufnahmebehälters angeordneten Werkzeuge über koaxiale Wellen unabhängig voneinander angetrieben sind. Dadurch lässt sich das angestrebte Ziel besonders günstig erreichen, nämlich im oberen Abschnitt des Aufnahmebehälters die Energie möglichst schnell auf das dort befindliche Gut einzubringen, z.B. durch dort rasch umlaufende Werkzeug. Im unteren Aufnahmebehälterbereich ist jedoch angestrebt, das Gut thermisch zu homogenisieren, um die gewünschte Ausgangstemperatur an der Auslauföffnung des Aufnahmetrichters aufrecht zu erhalten, hiefür kann ein vergleichsweise langsamerer Umlauf der Werkzeuge genügen.

Es ist zur Erreichung des gewünschten Effektes zweckmäßig, erfindungsgemäß im oberen und im unteren Abschnitt des Aufnahmebehälters je zumindest einen Temperaturfühler anzuordnen und den Arbeitsprozess in Abhängigkeit von den über diese Temperaturfühler festgestellten Wärmezuständen des behandelten Gutes zu steuern. Um Wärmeverluste nach außen zu vermeiden, hat der Aufnahmebehälter wärmeisolierende Wände. Eine weitere Möglichkeit, die Temperaturbedingungen im Aufnahmebehälter zu beeinflussen, besteht darin, dass der Aufnahmebehälter zumindest einen doppelwandigen Mantelabschnitt hat, dessen Hohlraum an eine Leitung für ein Temperiermedium angeschlossen ist, das von einer Flüssigkeit oder einem Gas gebildet sein kann. Dadurch lässt sich z.B. im oberen Aufnahmebehälterabschnitt die Erwärmung des dort befindlichen Gutes durch Zuführung zusätzlicher Wärmeenergie über das Temperiermedium beschleunigen und/oder im unteren Aufnahmebehälterabschnitt über das Temperiermedium eine Kühlung des dort befindlichen Gutes erzielen.

Es hat sich gezeigt, dass besonders günstige Arbeitsverhältnisse erzielbar sind, wenn das nutzbare Volumen des Aufnahmebehälters mindestens dem halben, vorzugsweise dem ein- bis dreifachen Durchsatz der Schnecke pro Stunde entspricht. Hierbei ist es zweckmäßig, wenn die gesamten Werkzeuge pro 100 kg Durchsatz der Extruderschnecke eine Mischenergie von 3 bis 12 kWh in das bearbeitete Kunststoffgut einbringen. Dies reicht auch für die Bearbeitung von feuchtem Kunststoffmaterial aus. Der weitaus überwiegende Anteil dieser Mischenergie wird über die dem oberen Innenraumteil des Aufnahmebehälters zugeordneten Werkzeuge eingebracht.

Das erfindungsgemäße Verfahren zum Betrieb einer erfindungsgemäßen Vorrichtung ist dadurch gekennzeichnet, dass die in das im Aufnahmebehälter befindliche Gut eingebrachte Energie durch Regelung der Drehzahl zumindest einer die Werkzeuge tragenden Welle geregelt wird. Dadurch lassen sich optimale Ergebnisse erzielen. Diese Regelung der Drehzahl der Werkzeuge erfolgt zweckmäßig in Abhängigkeit von den im unteren und oberen Abschnitt des Aufnahmebehälters gemessenen Temperaturen des behandelten Gutes. Eine, gegebenenfalls zusätzliche, Temperierung des behandelten Kunststoffgutes lässt sich durch Einleitung eines Temperiermediums in zumindest eines der Werkzeuge erzielen. Alternativ oder zusätzlich hinzu kann eine Temperierung des im Aufnahmebehälter befindlichen Gutes durch Einleitung eines Temperiermediums in den Hohlraum zumindest eines doppelwandig ausgebildeten Abschnittes des Mantels des Aufnahmebehälters erfolgen.

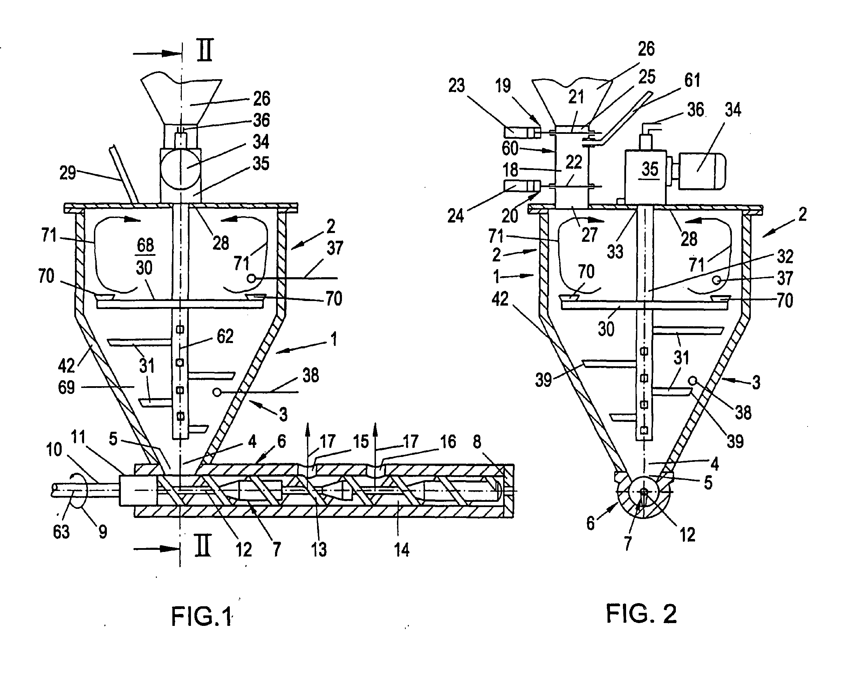

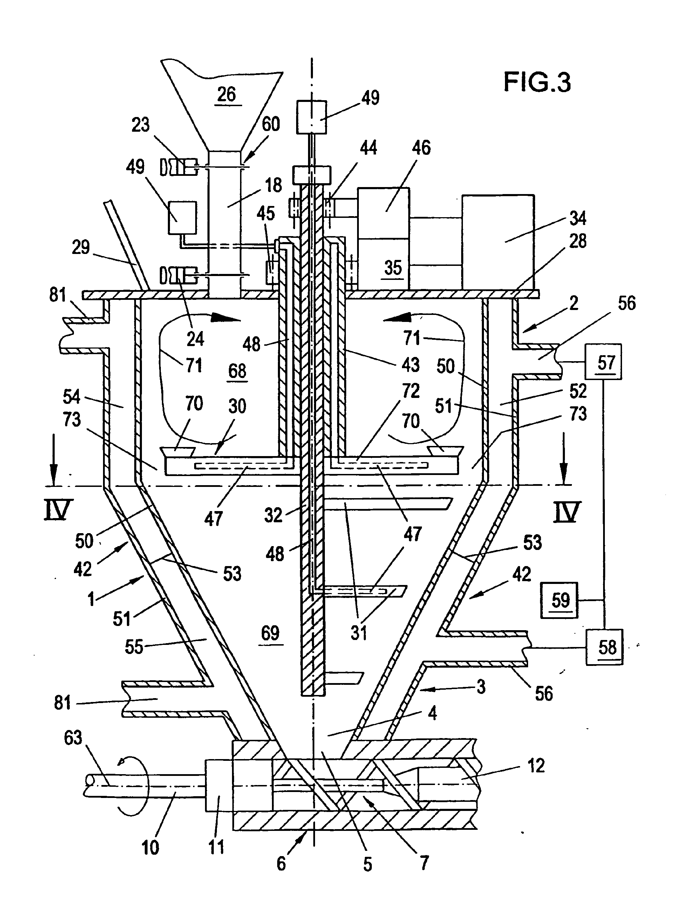

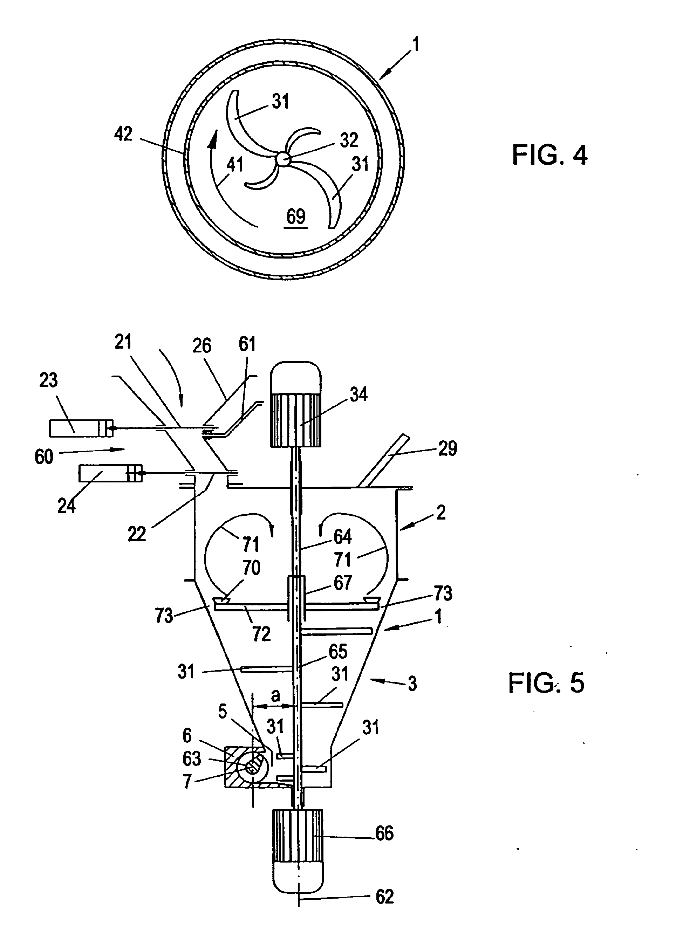

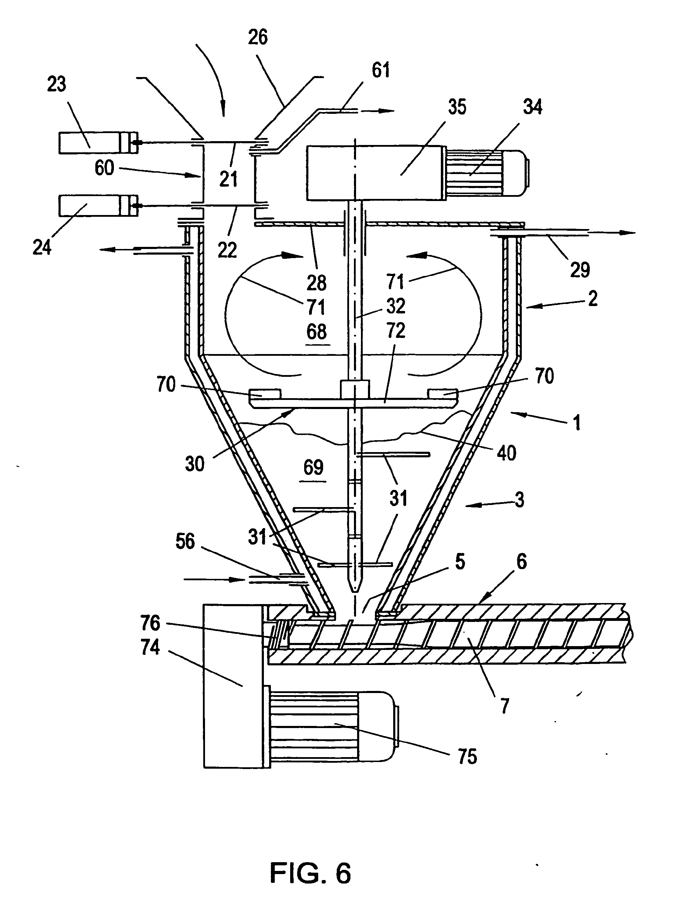

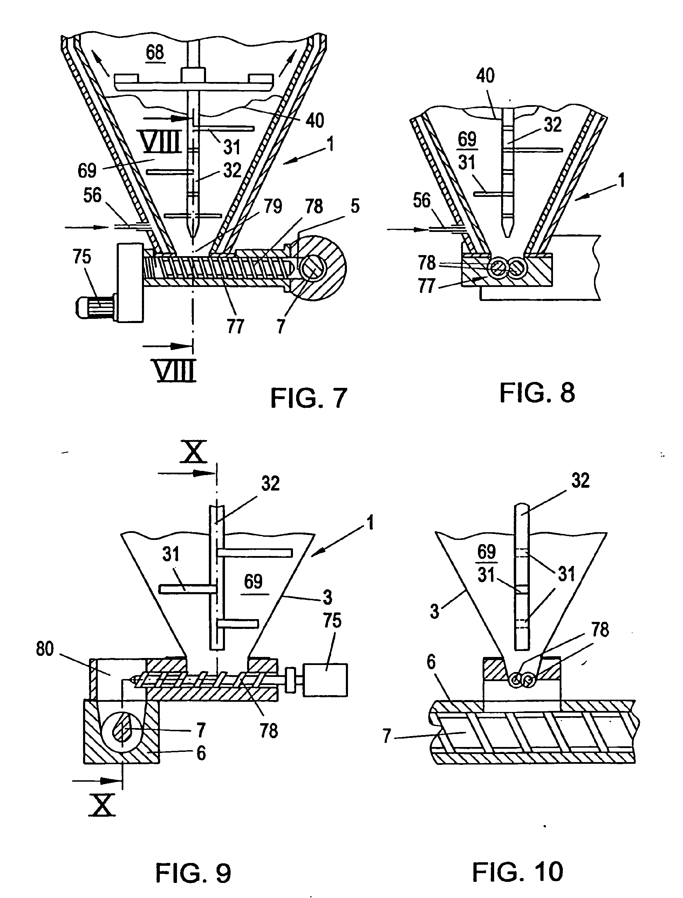

In der Zeichnung sind Ausführungsbeispiele des Erfindungsgegenstandes schematisch dargestellt. Fig. 1 zeigt eine erste Ausführungsform im Vertikalschnitt. Fig. 2 ist ein Schnitt nach der Linie II - II der Fig. 1. Fig. 3 zeigt eine zweite Ausführungsform im Schnitt ähnlich Fig. 1. Fig. 4 zeigt ein Detail im Horizontalschnitt. Fig. 5 zeigt eine dritte Ausführungsform im Vertikalschnitt. Fig. 6 zeigt eine vierte Ausführungsform im Vertikalschnitt. Fig. 7 ist ein Vertikalschnitt durch ein Detail einer Ausführungsvariante zu Fig. 6 und Fig. 8 ist ein Schnitt nach der Linie VIII - VIII der Fig. 7. Fig. 9 zeigt im Schnitt , ähnlich den Fig. 6 und 7, eine weitere Variante und Fig. 10 ist ein Schnitt nach der Linie X - X der Fig. 9.

Bei der Ausführungsform nach den Fig. 1 und 2 hat die Vorrichtung einen ortsfesten Aufnahmebehälter 1 für das zu verarbeitende Kunststoffmaterial, welches insbesondere von vorzerkleinertem, also rieselfähigem, PET-Material gebildet ist. In der Regel stammt dieses Material von zerkleinerten, insbesondere zermahlenen, Flaschen, Flaschenvorformlingen, Folien oder Platten aus PET. Der stehende Aufnahmebehälter 1 hat eine vertikale Achse 62 und hat einen oberen Abschnitt 2, der im wesentlichen zylindrisch ist, und einen an diesen Abschnitt 2 unten anschließenden kegelstumpfförmigen Abschnitt 3. Diese beiden Abschnitte 2, 3 begrenzen einen oberen Innenraumteil 68 und einen unteren Innenraumteil 69 des Behälters 1. Der gesamte Aufnahmebehälter 1 hat ein großes Volumen, um große Materialmengen so verarbeiten zu können, dass alle Materialpartien des zu verarbeitenden Gutes eine bestimmte, ausreichend große Verweilzeit im Aufnahmebehälter 1 verbringen, um ausreichend vorkonditioniert zu sein, bevor das betreffende Material aus der unteren Auslauföffnung 4 des Aufnahmebehälters 1 in eine vakuumdichte Befüllungsöffnung 5 des Gehäuses 6 einer Schnecke 7 eintritt. Z.B. wird das Volumen des Aufnahmebehälters 1 so gewählt, dass das darin befindliche Gut eine durchschnittliche Durchlaufzeit durch den Behälter 1 von etwa einer Stunde erreicht. Das Gehäuse 6 bildet mit der Schnecke 7 zumeist einen Extruder, es kann sich hierbei um einen Ein- oder Mehrschneckenextruder handeln. In dem Gehäuse 6 wird das über die Befüllungsöffnung 5 der Schnecke 7 zugeführte Material von der Schnecke 7 plastifiziert und in an sich bekannter Weise durch einen Extruderkopf 8 in Strangform ausgedrückt. An den Extruderkopf 8 kann eine nicht dargestellte Granuliervorrichtung oder ein anderes formgebendes Werkzeug angeschlossen sein. Es kann sich jedoch bei der Schnecke 7 auch um eine bloße Transport- bzw. Dosierschnecke handeln, welche das von ihr transportierte Gut einer beliebigen Bearbeitungsvorrichtung, z.B. einem Extruder, zuführt. Die Befüllungsöffnung 5 ist zweckmäßig vakuumdicht direkt an die Austragsöffnung 4 angeschlossen, lediglich in Sonderfällen kann ein mittelbarer Anschluss, etwa über einen vakuumdichten Rohrstutzen, erfolgen.

Die Schnecke 7 wird in Richtung des Pfeiles 9 von einem nicht dargestellten Antrieb über eine Welle 10 angetrieben, die einen vakuumdichten stirnseitigen Abschluss 11 des Gehäuses 6 durchsetzt und mit dem Kern 12 der Schnecke 7 drehschlüssig verbunden ist. Wie dargestellt, kann dieser Kern 12 über die axiale Länge der Schnecke 7 unterschiedliche Durchmesser haben. Im dargestellten Ausführungsbeispiel vergrößert sich der Kerndurchmesser jeweils gegen zwei Entspannungszonen 13, 14 hin, vor denen das transportierte Material jeweils komprimiert und plastifiziert und danach in der Entspannungszone 13 bzw. 14 druckentlastet wird. Durch diese Druckentlastung können sich im von der Schnecke 7 transportierten Material enthaltene Gaseinschlüsse lösen und durch Entgasungsöffnungen 15 bzw. 16 aus dem Gehäuse 6 in Richtung der Pfeile 17 entweichen. Zweckmäßig werden diese Gase aufgefangen und gegebenenfalls der Wiederverwertung zugeführt. Im Anschluss an die zweite Entspannungszone 14 vergrößert sich der Durchmesser des Schneckenkernes 12 wieder, sodass das von der Schnecke 7 transportierte Material den Extruderkopf 8 bzw. die darin angeordneten Austrittsdüsen im ausreichend plastifizierten Zustand erreicht.

Das zu verarbeitende Material wird dem Aufnahmebehälter 1 über eine Kammer 18 (Fig. 2) einer evakuierbaren Schleuse 60 zugeführt, die vakuumdicht ausgebildet ist und hiezu oben und unten mit Ventilen 19 bzw. 20 versehen ist. Zweckmäßig sind diese Ventile 19, 20 als Schieberventile ausgebildet, deren Schieberplatten 21 bzw. 22 die Wände der Kammer 18 vakuumdicht durchsetzen und mittels hydraulisch oder pneumatisch betätigten Zylindern 23, 24 hin und her bewegbar sind. An die obere Einfüllöffnung 25 der Kammer 18 ist das Auslaufende eines Trichters 26 angeschlossen, über welchen das zu bearbeitende Gut in die Vorrichtung eingebracht wird. Das untere Auslaufende der Kammer 18 ist vakuumdicht an eine Öffnung 27 eines Deckels 28 angeschlossen, mit welchem der Aufnahmebehälter 1 nach oben vakuumdicht abgeschlossen ist. An diesen Deckel 28 ist eine Evakuierungsleitung 29 angeschlossen, über welche der Innenraum des Aufnahmebehälters 1 evakuierbar ist. Mittels einer weiteren Evakuierungsleitung 61 ist die Schleuse 60 evakuierbar.

Im Aufnahmebehälter 1 laufen als Radialflügel ausgebildete Werkzeuge 30, 31 um die vertikale Behälterachse 62 um. Diese Werkzeuge 30, 31 sind an einer vertikalen, zur Behälterachse 62 koaxialen Welle 32 befestigt und können sich von dieser im wesentlichen in horizontaler Richtung nach außen erstrecken. Die Welle 32 ist im Deckel 28 an der Stelle 33 vakuumdicht drehbar gelagert und wird zur Drehbewegung von einem regelbaren Motor 34, gegebenenfalls über ein Getriebe 35, angetrieben. Die Steuerleitungen hiefür sind mit 36 bezeichnet. Die Werkzeuge 30 sind im Bereich jener Höhe des Aufnahmebehälters 1 angeordnet, in welcher der trichterförmige untere Abschnitt 3 in den zylindrischen oberen Abschnitt 2 übergeht. Diese Werkzeuge 30 reichen bis nahe an die Wand des Abschnittes 2 des Aufnahmebehälters 1 heran und bewirken daher durch ihre hohe Umfangsgeschwindigkeit eine intensive Umrührung des in den Aufnahmebehälter 1 eingebrachten Gutes. Falls erforderlich, können diese Werkzeuge 30 mit Schneiden 70 versehen sein, sodass das bearbeitete Gut auch zerkleinert wird. Bei dieser Bearbeitung wird das im oberen Innenraumteil 68 des Aufnahmebehälters 1 befindliche Gut in Form einer Mischtrombe 71 umgewälzt. Die hiefür aufgewendete Energie geht zum Großteil als Wärmeenergie in das so behandelte Gut über und erwärmt es dadurch. Wie ersichtlich, sind die im unteren Innenraumteil 69 des Aufnahmebehälters befindlichen Werkzeuge 31 kürzer als die im zylindrischen oberen Abschnitt 2 des Aufnahmebehälters 1 angeordneten Werkzeuge 30. Die unteren Werkzeuge 31 bringen daher durch ihre geringere Umfangsgeschwindigkeit weniger Energie in das behandelte Kunststoffgut ein als die oberen Werkzeuge 30. Im oberen Abschnitt 2 des Aufnahmebehälters 1 erfolgt daher eine schnelle Energieeinbringung zwecks Erwärmung des von oben kalt zugeführten Kunststoffgutes, welches, hervorgerufen durch den über die Schnecke 7 erfolgenden Gutabzug durch die Auslauföffnung 4, allmählich nach unten absinkt und in den Bereich der kürzeren Werkzeuge 31 gelangt. Diese Werkzeuge 31 rühren das in ihrem Bereich befindliche Kunststoffgut nur um, der untere Innenraumteil 69 des Behälters 1 bildet daher einen Verweilraum für das bearbeitete, erwärmte Gut, in welchem ein Ausgleich allfälliger thermischer Inhomogenitäten erfolgt. Zugleich wird ein Zusammenbacken des erwärmten Kunststoffgutes verhindert. Insbesondere dann, wenn der untere Innenraumteil 69 des Aufnahmebehälters 1 höher ist als der obere Innenraumteil 68, ergibt sich die angestrebte beträchtliche Verweilzeit des bearbeiteten und umgerührten Kunststoffmateriales im Innenraumteil 69. Zweckmäßig sind die Verhältnisse so getroffen, dass das gesamte nutzbare Volumen des Aufnahmebehälters 1 mindestens dem halbstündlichen Durchsatz der Schnecke 7 entspricht. Die in den Abschnitten 2 und 3 des Aufnahmebehälters 1 im behandelten Kunststoffgut auftretenden Temperaturen werden zweckmäßig mittels Temperaturfühlern 37 bzw. 38 überwacht, an welche Leitungen angeschlossen sind, die zu einer nicht dargestellten Steuereinrichtung führen, über welche geeignete Steuersignale an die Steuerleitungen 36 des Motors 34 abgegeben werden. Die Enden 39 der nach unten zu immer kürzer werdenden Werkzeuge 31 können, wie dies in Fig. 2 dargestellt ist, abgeschrägt sein, um sich an die Trichterform des Behälterabschnittes 3 anzupassen. Die Werkzeuge 31 sind zweckmäßig sehr dünn, um möglichst wenig Energie in das Gut einzubringen.

Gegebenenfalls können die sich von der Welle 32 nach außen erstreckenden Stangen der oberen Werkzeuge 30 auch mit Mischflügeln versehen sein, um die Reibungseinwirkung auf das im Behälter 1 befindliche Gut zu erhöhen und dadurch die Energieübertragung auf das behandelte Gut zu verstärken.

Um Wärmeverluste nach außen zu vermeiden, sind die Wände des Mantels 42 und zweckmäßig auch der Deckel 28 des Aufnahmebehälters 1 wärmeisoliert.

Bei der Ausführungsvariante nach den Fig. 3 und 4 können die im oberen Abschnitt 2 und im unteren Abschnitt 3 des Aufnahmebehälters 1 angeordneten Werkzeuge 30 bzw. 31 unabhängig voneinander betrieben werden. Hiezu sind die Werkzeuge 31 an einer zentralen Welle 32 und die Werkzeuge 30 an einer diese Welle 32 koaxial umgebenden Hohlwelle 43 befestigt. Die beiden Wellen 32, 43 sind über Zahnkränze 44 bzw. 45 von zwei Getrieben 35, 46 angetrieben, die beide von einem gemeinsamen Motor 34 aus angetrieben sein können. Die beiden Getriebe 35, 46 sind über nicht dargestellte Steuerleitungen regelbar, zweckmäßig in Abhängigkeit von den über die Temperaturfühler 37, 38 (Fig. 1, 2) gemessenen Temperaturen des behandelten Gutes. Der Motor 34 und die Getriebe 35,46 können vom Deckel 28 getragen sein.

Die oberen Werkzeuge 30 sind hier von einer Scheibe 72 gebildet, welche an ihrem äußeren Umfang die Schneiden 70 trägt. Diese Scheibe kann in der gleichen Richtung umlaufen wie die im unteren Innenraumteil 69 des Aufnahmebehälters 1 befindlichen Werkzeuge 31 (Pfeil 41, Fig. 4). Die beiden Antriebswellen 32, 43 geben jedoch auch die Möglichkeit, unterschiedliche Drehrichtungen zu wählen.

Fig. 4 zeigt eine besonders zweckmäßige Form der Werkzeuge 31 für den unteren Abschnitt 3 des Behälters 1. Wie ersichtlich, sind die Werkzeuge 31 gekrümmt ausgebildet, und zwar in Richtung ihres Umlaufes (Pfeil 41), um das zu bearbeitende Gut vom äußeren Rand zur Mitte hin zu transportieren, was eine besondere Mischwirkung ergibt.

Eine zusätzliche Beeinflussung der Temperaturverhältnisse in den beiden Behälterabschnitten 2, 3 lässt sich dadurch erzielen, dass eine Temperierung des im jeweiligen Abschnitt 2 bzw. 3 befindlichen Gutes über Hohlräume 47 der Werkzeuge 30 bzw. 31 erfolgt, an welche Hohlräume 47 Zufuhrleitungen 48 angeschlossen sind, über die ein Temperiermedium in die Hohlräume 47 eingeleitet wird. Über geeignete Drehkupplungen erfolgt die Einleitung des Temperiermediums aus den hiefür vorgesehenen Quellen 49 in die Zufuhrleitungen 48. Das Temperiermedium muss nicht für alle Werkzeuge 30 und 31 dasselbe sein, es ist z.B. durchaus möglich, die die Werkzeuge 30 bildende Scheibe 72 mittels des Temperiermediums zusätzlich zu erwärmen, um das von ihr bzw. den Schneiden 70 bearbeitete Gut möglichst rasch auf die gewünschte erhöhte Temperatur zu bringen, wogegen die Werkzeuge 31 mittels eines anderen oder auf einer anderen Temperatur befindlichen Temperiermediums gekühlt werden. Die Temperaturen der den Werkzeugen 30, 31 zugeleiteten Temperaturmedien können in geeigneter Weise geregelt werden.

Eine weitere Möglichkeit zur Beeinflussung der Temperatur des im Aufnahmebehälter 1 befindlichen Gutes ergibt sich dadurch, dass eine Temperierung des Innenraumes des Aufnahmebehälters 1 durch eine doppelwandige Ausbildung seines Mantels 42 erfolgt. In Fig. 3 ist dies dargestellt, wobei der zwischen den beiden Wänden 50, 51 des Mantels 42 befindliche Hohlraum 52 durch Zwischenwände 53 in zwei übereinander liegende Abschnitte 54, 55 unterteilt ist, die jeweils an eine Leitung 56 bzw. 81 für die Zufuhr bzw. Abfuhr eines Temperiermediums angeschlossen sind, das ein Gas oder eine Flüssigkeit sein kann. Die beiden Leitungen 56 sind über Steuereinrichtungen 57 bzw. 58 an eine Quelle 59 für das Temperiermedium angeschlossen. Gegebenenfalls können unterschiedliche Temperiermediumquellen die beiden Steuereinrichtungen 57, 58 anspeisen. Die Steuereinrichtungen 57, 58 können Menge und/oder Temperatur des jeweiligen Temperiermediums regeln, sie können von den Temperaturfühlern 37, 38 (Fig. 1, 2) beeinflusst sein. Wie ersichtlich, kann durch Wahl des Ortes der Zwischenwand 53 das Temperaturverhalten in den beiden Abschnitten 2, 3 des Aufnahmebehälters 1 beeinflusst werden. Die Zwischenwände 53 können, aber müssen nicht, daher an der Übergangsstelle des trichterförmigen Abschnittes 3 in den oberen zylindrischen Abschnitt 2 angeordnet sein.

Zwischen dem Rand der Scheibe 72 und der Innenwand 51 des Aufnahmebehälters 1 besteht ein Ringspalt 73, dessen Breite in der Regel zumindest 20 mm beträgt, sodass das im Innenraumteil 68 umgewälzte und dadurch erwärmte Gut allmählich in den unteren Innenraumteil 69 des Aufnahmebehälters 1 gelangen kann. Um ein zu rasches Durchtreten des behandelten Gutes durch diesen Ringspalt 73 zu vermeiden, sollte dessen Breite aber nicht zu groß sein, in der Regel ist sie kleiner als 30 mm. Eine Anpassung an unterschiedliche Beschaffenheiten des bearbeiteten Gutes ist möglich, wenn die Breite dieses Ringspaltes 73 veränderbar ist. Hiefür kann die Scheibe 72 bzw. die Innenwand des Behälters so ausgebildet sein, dass die betreffenden Randabschnitte der Scheibe 72 bzw. die Wand in radialer Richtung verstellbar sind.

Die nutzbare Kapazität in Kilogramm des zu bearbeitenden Gutes des großvolumigen Aufnahmebehälters 1 entspricht mindestens dem halben, zweckmäßig dem ein- bis dreifachen, Durchsatz der Schnecke 7 pro Stunde in Kilogramm. Der Antrieb (Motor 34) für die oberen Werkzeuge 30 bringt zweckmäßig, pro 100 kg/h Durchsatz der Schnecke, 3 bis 12 kWh Mischenergie in das zu behandelnde Gut ein. Diese Arbeitsbedingungsbeispiele haben sich als günstig erwiesen, die näheren Arbeitsbedingungen hängen aber von der näheren Beschaffenheit und dem Zustand des jeweils in den Aufnahmebehälter 1 eingebrachten Gutes ab.

Die Welle 32 (bzw. auch die Hohlwelle 43) muss nicht exakt vertikal angeordnet sein, Schrägstellungen sind möglich, jedoch ergibt sich um so mehr eine Förderung des im Aufnahmebehälter 1 befindlichen Gutes nach oben bzw. unten, je mehr die Welle geneigt angeordnet ist. Im unteren Innenraumteil 69 ist eine solche Förderung in vertikaler Richtung in der Regel nicht erwünscht, da das Gut dort lediglich umgerührt, aber nicht mehr wesentlich erwärmt werden soll.

Bei den Ausführungsformen nach den Fig. 1 bis 4 erfolgt die Befüllung des Gehäuses 6 der Schnecke 7 in radialer Richtung, bezogen auf die Achse 63 der Schnecke 7, mit welcher Radialrichtung die Achse 62 des Aufnahmebehälters 1 zusammenfällt. Ebenso kann das Gehäuse 6 der Schnecke 7 stirnseitig vom Material aus dem Aufnahmebehälter 1 befüllt werden. Wie Fig. 5 zeigt, ist jedoch auch ein tangentialer Anschluss des Schneckengehäuses 6 an den Aufnahmebehälter 1 möglich, so dass also die Behälterachse 62 an der Schneckenachse 63 im Abstand a vorbeiläuft. Dies ermöglicht es, die die Werkzeuge 30, 31 tragende Welle zu unterteilen und die beiden Wellenabschnitte 64, 65 durch je einen regelbaren Motor 34 bzw. 66 von oben bzw. unten anzutreiben. Hiezu ist es zweckmäßig, das untere Ende des oberen Wellenabschnittes 64 als den unteren Wellenabschnitt 65 umgreifende Hülse 67 auszubilden, sodass die beiden Wellenabschnitte 64, 65 relativ zueinander zentriert und gelagert sind. Dieser tangentiale Anschluss des Schneckengehäuses 6 an den Behälter 1 ermöglicht es auch, über im Bereich der seitlichen Auslauföffnung des Behälters 1 bzw. der Befüllungsöffnung 5 des Schneckengehäuses 6 angeordnete, um die vertikale Achse 62 umlaufende Werkzeuge 31 eine stopfende Befüllung des Schneckengehäuses 6 zu erzielen.

Bei dieser Ausführungsform sind die Werkzeuge 30 ebenfalls als von einer Scheibe 72 getragene Schneiden 70 gebildet. Diese Scheibe 72 ist etwas tiefer als der obere Rand des trichterförmigen unteren Behälterabschnittes 3 angeordnet. Dies begünstigt die Ausbildung der Mischtrombe 71, da das von den Schneiden 70 bearbeitete Gut in radialer Richtung von der Scheibe 72 abgeschleudert wird und auf die geneigt angeordneten Mantelwandteile des Behälterabschnittes 3 gelangt, sodass das auftreffende Gut eine Bewegungskomponente nach oben erhält.

Bei der Ausführungsform nach Fig. 6 liegt die Scheibe 72, welche die Schneiden 70 trägt, etwa auf halber Höhe des Aufnahmebehälters 1 und wesentlich unter der Übergangslinie zwischen den beiden Behälterabschnitten 2, 3. Wie erwähnt, rühren die unter der Scheibe 30 angeordneten Werkzeuge 31 das bearbeitete Gut nur um, verleihen ihm jedoch keine Mischtrombe, sodass sich ein fast ebener Materialspiegel 40 im Innenraumteil 69 ergibt.

Das untere Ende des trichterförmigen Behälterteiles 3 mündet in die Befüllungsöffnung 5 einer Extruderschnecke 7, die über ein Getriebe 74 von einem Motor 75 angetrieben wird. Ein Dichtgewinde 76 verhindert des Austritt bearbeiteten Gutes am antriebseitigen Ende der Schnecke 7.

Wie die Fig. 7 und 8 zeigen, kann der Aufnahmebehälter 1 unten in die Befüllungsöffnung 79 einer Dosierschneckenanordnung 77 münden, welche z.B. zwei achsparallel zueinander angeordnete, von einem gemeinsamen Motor 75 angetriebene Dosierschnecken 78 aufweist. Diese Dosierschneckenanordnung fördert das Material in eine radial angeordnete Befüllungsöffnung 5 einer Extruderschnecke 7.

Eine Variante hiezu zeigen die Fig. 9 und 10. Die Doppel-Dosierschnecke 78 fördert hier das ihr vom Aufnahmebehälter 1 zugeleitete Material in einen Schacht 80, in welchem es von oben in die Extruderschnecke 7 fällt.

Durch die beschriebenen Ausführungsbeispiele lässt sich für jedes in den Behälter 1 eingebrachte vorzerkleinerte Kunststoffteilchen eine durchschnittliche Verweilzeit von zumindest einer halben Stunden erzielen. Diese Verweilzeit ist gerechnet vom Eintritt des Kunststoffteilchens in die obere Schleuse 60 bis zum Austritt aus dem Behälter 1 durch die Auslauföffnung 4.

Die untere Auslauföffnung 4 des Behälters 1 kann das Material auch zu einer andersartigen Anlage als dargestellt führen, z.B. mittels eines Fördergerätes zu einem Silo oder einer Einrichtung für eine beliebige Weiterverarbeitung auch zu einem Dosiergerät.

## Patentansprüche

1. Vorrichtung zur Befüllung einer in einem Gehäuse gelagerten Schnecke, insbesondere eines Extruders, zur Aufbereitung von vorzerkleinertem Kunststoffgut, insbesondere PET, wobei die Befüllungsöffnung des Schneckengehäuses mit der unteren Auslauföffnung eines stehenden, vakuumdichten Aufnahmebehälters für das zu bearbeitende Gut in Strömungsverbindung steht, und wobei im Aufnahmebehälter durch einen Antrieb um eine, insbesondere vertikale, Achse umlaufende Werkzeuge vorgesehen sind, welche auf das in den Aufnahmebehälter von oben durch eine Schleuse eingebrachte Gut einwirken, **dadurch gekennzeichnet, dass** im Aufnahmebehälter (1) im Mittelbereich der Höhe desselben zumindest ein zur Erzeugung einer Mischtrombe rasch umlaufendes Werkzeug (30) zwischen einem oberen Innenraumteil (68) und einem unteren Innenraumteil (69) im Aufnahmebehälter (1) angeordnet ist, wobei im oberen Innenraumteil (68) das behandelte Kunststoffgut, insbesondere PET, in Form der Mischtrombe unter Energieeinbringung umläuft, wogegen der untere Innenraumteil (69) einen Verweilraum für das in ihn gelangte erwärmte Kunststoffgut zwecks thermischer Homogenisierung desselben bildet, wobei in diesem Verweilraum umlaufende Werkzeuge (31) als reine Mischwerkzeuge ohne wesentliche Energieeinbringung zur Vermeidung eines Zusammenbackens des Kunststoffgutes ausgebildet sind.

2. Vorrichtung nach Anspruch 1, **dadurch gekennzeichnet, dass** das im Mittelbereich des Aufnahmebehälters (1) umlaufende Werkzeug auf der Oberseite einer Scheibe (72) sitzt, deren Rand in Abstand von der Innenwand des Aufnahmebehälters (1) liegt.

3. Vorrichtung nach Anspruch 2, **dadurch gekennzeichnet, dass** der Abstand zwischen 20 mm und 30 mm beträgt.

4. Vorrichtung nach Anspruch 2 oder 3, **dadurch gekennzeichnet, dass** die Größe des Abstandes einstellbar ist.

5. Vorrichtung nach einem der Ansprüche 1 bis 4, **dadurch gekennzeichnet, dass** der Aufnahmebehälter (1) einen oberen zylindrischen Abschnitt und einen unteren konischen Abschnitt (3) hat, der sich bis zur Befüllungsöffnung (5) des Schneckengehäuses (6) verjüngt.

6. Vorrichtung nach Anspruch 5, **dadurch gekennzeichnet, dass** das die Mischtrombe (71) erzeugende Werkzeug (30), gegebenenfalls eine Zerkleinerungsanordnung, im Bereich des oberen Endes des konischen Abschnittes (3) angeordnet ist.

7. Vorrichtung nach Anspruch 5 oder 6, **dadurch gekennzeichnet, dass** sich die Höhe des zylindrischen Abschnittes (2) des Aufnahmebehälters zur Höhe des konischen Abschnittes (3) desselben wie 3 : 1 bis 1 : 3 verhält.

8. Vorrichtung nach einem der Ansprüche 1 bis 7, **dadurch gekennzeichnet, dass** sich die Werkzeuge (31) im unteren Innenraumteil (69) des Aufnahmebehälters (1) von ihrer Welle (32) weniger weit erstrecken als im oberen Innenraumteil (2) des Aufnahmebehälters (1).

9. Vorrichtung nach einem der Ansprüche 1 bis 8, **dadurch gekennzeichnet, dass** die Werkzeuge (31) im unteren Innenraumteil (69) des Aufnahmebehälters (1) als gekrümmte Mischflügel ausgebildet sind.

10. Vorrichtung nach einem der Ansprüche 1 bis 9, **dadurch gekennzeichnet, dass** der Aufnahmebehälter (1) oben vakuumdicht durch einen Deckel (28) abgeschlossen ist, der eine Öffnung (27) für die Einbringung des Gutes hat, an die eine Kammer (18) angeschlossen ist, die oben und unten durch vakuumdicht schließende Ventile (19, 20), insbesondere Schieber (21, 22), abschließbar ist, und an die eine Evakuierungsleitung (61) angeschlossen ist, wobei eine zusätzliche Evakuierungsleitung (29) an den Aufnahmebehälter (1) angeschlossen ist.

11. Vorrichtung nach Anspruch 10, **dadurch gekennzeichnet, dass** der Deckel (28) den Antrieb (34), insbesondere einen regelbaren Antrieb, und gegebenenfalls auch ein Getriebe (35), für die Werkzeuge (30, 31) trägt.

12. Vorrichtung nach einem der Ansprüche 1 bis 11, **dadurch gekennzeichnet, dass** die im unteren Innenraumteil (69) des Aufnahmebehälters (1) angeordneten Werkzeuge (31) und die dem oberen Innenraumteil (2) des Aufnahmebehälters (1) zugeordneten Werkzeuge (30) über koaxiale Wellen (32, 43) unabhängig voneinander angetrieben sind.

13. Vorrichtung nach Anspruch 12, **dadurch gekennzeichnet, dass** die im unteren Innenraumteil (69) des Aufnahmebehälters (1) angeordneten Werkzeuge (31) mit geringerer Geschwindigkeit umlaufen als die dem oberen Innenraumteil (68) des Aufnahmebehälters (1) zugeordneten Werkzeuge (30).

14. Vorrichtung nach Anspruch 12 oder 13, **dadurch gekennzeichnet, dass** die im oberen Innenraumteil (68) des Aufnahmebehälters (1) angeordneten Werkzeuge (30) von einer Hohlwelle (43) getragen sind, welche eine die im unteren Innenraumteil (69) des Aufnahmebehälters (1) angeordneten Werkzeuge (31) tragende Welle (32) umschließt, wobei beide Wellen (32, 43) von an ihren oberen Enden angeordneten Antrieben angetrieben sind.

15. Vorrichtung nach Anspruch 12 oder 13, **dadurch gekennzeichnet, dass** die eine Welle (32) von einem an ihrem oberen Ende angeordneten Antrieb angetrieben ist, die andere Welle (43) hingegen von einem an ihrem unteren Ende angeordneten Antrieb.

16. Vorrichtung nach einem der Ansprüche 1 bis 15, **dadurch gekennzeichnet, dass** die Auslauföffnung (4) des Aufnahmebehälters (1) tangential an das Gehäuse (6) der Schnecke (7) angeschlossen ist.

17. Vorrichtung nach einem der Ansprüche 1 bis 16, **dadurch gekennzeichnet, dass** im oberen Innenraumteil (68) des Aufnahmebehälters (1) und im unteren Innenraumteil (69) des Aufnahmebehälters (1) je zumindest ein Temperaturfühler (37 bzw. 38) angeordnet ist.

18. Vorrichtung nach einem der Ansprüche 1 bis 17, **dadurch gekennzeichnet, dass** der Aufnahmebehälter (1) einen wärmeisolierenden Mantel (42) hat.

19. Vorrichtung nach einem der Ansprüche 1 bis 18, **dadurch gekennzeichnet, dass** der Aufnahmebehälter (1) zumindest einen doppelwandig ausgebildeten Abschnitt seines Mantels (42) hat, wobei der zwischen den beiden Wänden (50, 51) befindliche Hohlraum (52) an eine Leitung (56) für ein Temperiermedium angeschlossen ist.

20. Vorrichtung nach einem der Ansprüche 1 bis 19, **dadurch gekennzeichnet, dass** zumindest ein Werkzeug (30, 31) einen Hohlraum (47) für die Einleitung eines Temperiermediums hat.

21. Vorrichtung nach einem der Ansprüche 1 bis 20, **dadurch gekennzeichnet, dass** zumindest ein die Mischtrombe im oberen Innenraumteil (68) des Aufnahmebehälters (1) erzeugendes Werkzeug (30) als Zerkleinerungswerkzeug ausgebildet ist, vorzugsweise mit Schneiden versehen ist.

22. Vorrichtung nach einem der Ansprüche 1 bis 21, **dadurch gekennzeichnet, dass** das nutzbare Volumen des Aufnahmebehälters (1) mindestens dem halben, vorzugsweise dem ein- bis dreifachen, Durchsatz der Schnecke (7) pro Stunde entspricht.

23. Vorrichtung nach einem der Ansprüche 1 bis 22, **dadurch gekennzeichnet, dass** die dem oberen Innenraumteil (68) des Aufnahmebehälters (1) zugeordneten Werkzeuge (30) pro 100 kg/h Durchsatz der Schnecke (7) eine Mischwärme von 3 bis 12 kWh in das bearbeitete Kunststoffgut einbringen.

24. Verfahren zum Betrieb einer Vorrichtung nach einem der Ansprüche 1 bis 23, **dadurch gekennzeichnet, dass** die in das im Aufnahmebehälter (1) befindliche Gut eingebrachte Energie durch Regelung der Drehzahl zumindest einer die Werkzeuge tragenden Welle (32 bzw. 43) geregelt wird.

25. Verfahren nach Anspruch 24, **dadurch gekennzeichnet, dass** die Regelung der Drehzahl der Welle (32, 43) in Abhängigkeit von der im unteren und/oder oberen Abschnitt (3 bzw. 2) des Aufnahmebehälters (1) gemessenen Temperatur des behandelten Kunststoffgutes erfolgt.

26. Verfahren nach Anspruch 24 oder 25, **dadurch gekennzeichnet, dass** eine, gegebenenfalls zusätzliche, Temperierung des behandelten Kunststoffgutes durch Einleitung eines Temperiermediums in zumindest eines der Werkzeuge (30, 31) erfolgt.

27. Verfahren nach einem der Ansprüche 24 bis 26, **dadurch gekennzeichnet, dass** eine, gegebenenfalls zusätzliche, Temperierung des im Aufnahmebehälter (1) befindlichen Gutes durch Einleitung eines Temperiermediums in den Hohlraum (52) zumindest eines doppelwandig ausgebildeten Abschnittes des Mantels (42) des Aufnahmebehälters (1) erfolgt.

## Claims

1. Apparatus for filling a screw bearingly supported within a housing, in particular of an extruder, for processing of pre-comminuted synthetic plastic material, in particular PET, wherein the filling opening of a screw housing is in flow connection with the lower outflow opening of an upright vacuum-tight receptacle for material to be processed, and wherein within the receptacle tools are provided which are driven by a drive means for rotation around an, in particular vertical, axis, which tools act onto the material that is introduced into the receptacle from above through a sluice, **characterized in that** within the receptacle (1) in the middle region of its height at least one quickly rotating tool (30) for creating a mixing cone is disposed between an upper interior portion (68) and a lower interior portion (69), wherein within the upper interior portion (68) the processed plastic material, in particular PET, circulates in form of a mixing cone with introduction of power, whereas the lower interior portion (69) constitutes a dwell space for the heated plastic material that has reached it, for thermal homogenization thereof, whereby circulating tools (31) disposed within this dwell space are formed as mere mixing tools without substantial power introduction in order to avoid agglomeration of the plastic material.

2. Apparatus according to claim 1, **characterized in that** the tool circulating within the central region of the receptacle (1) is positioned on the upper side of a disc (72), the edge thereof is spaced from the inner wall of the receptacle (1).

3. Apparatus according to claim 2, **characterized in that** the distance lies between 20 mm and 30 mm.

4. Apparatus according to claim 2 or 3, **characterized in that** the size of the distance is adjustable.

5. Apparatus according to any of claims 1 to 4, **characterized in that** the receptacle (1) has an upper cylindrical portion and a lower conical portion (3) that tapers to the filling opening (5) of the screw housing (6).

6. Apparatus according to claim 5, **characterized in that** the tool (30), if desired a comminuting device, creating a mixing cone (71) is disposed in the region of the upper end of the conical section (3).

7. Apparatus according to claim 5 or 6, **characterized in that** the height of the cylindrical section (2) of the receptacle is in the ratio of 3:1 to 1:3 to the height of the conical section (3) of the receptacle.

8. Apparatus according to any of claims 1 to 7, **characterized in that** the tools (31) in the lower interior portion (69) of the receptacle (1) extend for a less distance from their shaft (32) as the tools within the upper interior portion (2) of the receptacle (1).

9. Apparatus according to any of claims 1 to 8, **characterized in that** the tools (31) within the lower interior portion (69) of the receptacle (1) are formed as curved mixing wings.

10. Apparatus according to any of claims 1 to 9, **characterized in that** the receptacle (1) is vacuum-tightly closed to above by a cover (28) which has an opening (27) for the introduction of the material, to which opening a chamber (18) is connected, which is closeable to above and to below by vacuum-tightly closing valves (19, 20), in particular slide gates 821, 22), and to which chamber an avacuating line (61) is connected, whereby an additional avacuating line (29) is connected to the receptacle (1).

11. Apparatus according to claim 10, **characterized in that** the cover (28) carries the drive means (34) for the tools (30, 31), in particular a controllable drive means, and, if desired, also a gearing (35).

12. Apparatus according to any of claim 1 to 11, **characterized in that** the tools (31) positioned within the lower interior portion (69) of the receptacle (1) and the tools (30) positioned within the upper interior portion (2) of the receptacle (1) are driven independently from each other by means of coaxial shafts (32, 43).

13. Apparatus according to claim 12, **characterized in that** the tools (31) disposed within the lower interior portion (69) or the receptacle (1) circulate with a less velocity than the tools (30) associated to the upper interior portion (68) of the receptacle (1).

14. Apparatus according to claim 12 or 13, **characterized in that** the tools (30) disposed within the upper interior portion (68) of the receptacle (1) are carried by a hollow shaft (43) surrounding a shaft (32) carrying the tools (31) disposed within the lower interior portion (69) of the receptacle (1), whereby both shafts (32, 43) are driven by drive means disposed at their upper ends.

15. Apparatus according to claim 12 or 13, **characterized in that** the one shaft (32) is driven by a drive means disposed at its upper end, whereas the other shaft (43) is driven by a drive means disposed at its lower end.

16. Apparatus according to any of claims 1 to 15, **characterized in that** the outflow opening (4) of the receptacle (1) is connected tangentially to the housing (6) of the screw (7).

17. Apparatus according to any of claims 1 to 16, **characterized in that** at least one temperature sensor (37 or 38) each is disposed within the upper interior portion (68) of the receptacle (1) and within the lower interior portion (69) of the receptacle (1).

18. Apparatus according to any of claims 1 to 17, **characterized in that** the receptacle (1) has a heat-insulating casing (42).

19. Apparatus according to any of claims 1 to 18, **characterized in that** the receptacle (1) has at least one double-walled section of its casing (42), wherein the hollow space (42) disposed between the two walls (50, 51) is connected to a line (56) for a tempering medium.

20. Apparatus according to any of claims 1 to 19, **characterized in that** at least one tool (30, 31) has a hollow space (47) for the introduction of a tempering medium.

21. Apparatus according to any of claims 1 to 20, **characterized in that** at least one tool (30) creating the mixing cone in the upper interior portion (68) of the receptacle (1) is formed as a comminuting tool, preferably is provided with cutting edges.

22. Apparatus according to any of claims 1 to 21, **characterized in that** the effective volume of the receptacle (1) corresponds to at least the half throughput of the screw (7) per hour, preferably to one to three times of this throughput.

23. Apparatus according to any of claims 1 to 22, **characterized in that** the tools (30) associated to the upper interior portion (68) of the receptacle (1) introduce a mixing heat into the processed material of 3 to 12 kWh per 100 kg/h throughput of the screw (7).

24. Process for operating an apparatus according to any of claims 1 to 23, **characterized in that** the energy introduced into the material contained within the receptacle (1) is controlled by controlling the rotational speed of at least one of the shafts (32 or 43), respectively, carrying the tools.

25. Process according to claim 24, **characterized in that** the control of the rotational speed of the shaft (32, 43) is performed independently from the temperature of the processed plastics material measured in the lower and/or in the upper section (3 or 2), respectively, of the receptacle (1).

26. Process according to claim 24 or 25, **characterized in that** tempering of the processed plastics material, if desired an additional tempering, is performed by introduction of a tempering medium into at least one of the tools (30, 31).

27. Process according to any of claims 24 to 26, **characterized in that** tempering of the material contained within the receptacle (1), if desired an additional tempering, is performed by introduction of a tempering medium into the hollow space (52) of at least one double-walled section of the casing (42) of the receptacle (1).

## Revendications

1. Dispositif de chargement d'une vis sans fin logée dans un bâti, notamment une vis sans fin d'extrudeuse, pour le traitement de matière plastique prébroyée, notamment du PET, l'ouverture de chargement du bâti de vis sans fin étant raccordée en écoulement à l'ouverture de sortie inférieure d'une cuve verticale étanche au vide, destinée à recevoir la matière à traiter, et la cuve contenant des outils entraînés en rotation par un dispositif d'entraînement autour d'un arbre notamment vertical, lesquels outils agissent sur la matière introduite par le haut de la cuve à travers un sas, **caractérisé en ce qu'**au moins un outil à rotation rapide (30) destiné à produire un tourbillon de mélange est agencé à mi-hauteur de la cuve (1) entre une partie supérieure (68) et une partie inférieure (69) du volume intérieur de la cuve (1), la matière plastique traitée dans la partie supérieure (68), notamment du PET, tournant sous la forme d'un tourbillon de mélange sous apport d'énergie, alors que la partie inférieure (69) forme une zone de maintien où la matière plastique échauffée qui y est introduite séjourne en vue de son homogénéisation thermique, les outils rotatifs (31) prévus dans cette zone de maintien étant conçus comme de simples outils de mélange sans apport d'énergie sensible afin d'éviter l'agglomération de la matière plastique.

2. Dispositif selon la revendication 1, **caractérisé en ce que** l'outil rotatif agencé à mi-hauteur de la cuve (1) est situé sur la face supérieure d'un disque (72) dont le bord est distant de la paroi intérieure de la cuve (1).

3. Dispositif selon la revendication 2, **caractérisé en ce que** cette distance est comprise entre 20 et 30 mm.

4. Dispositif selon la revendication 2 ou la revendication 3, **caractérisé en ce que** cette distance est réglable.

5. Dispositif selon l'une quelconque des revendications 1 à 4, **caractérisé en ce que** la cuve (1) comporte une portion supérieure cylindrique et une portion inférieure conique (3) qui s'effile jusqu'à l'ouverture de chargement (5) du bâti de vis sans fin (6).

6. Dispositif selon la revendication 5, **caractérisé en ce que** l'outil (30) produisant le tourbillon de mélange (71), éventuellement un dispositif de broyage, est agencé au niveau de l'extrémité supérieure de la portion conique (3).

7. Dispositif selon la revendication 5 ou la revendication 6, **caractérisé en ce que** le rapport de la hauteur de la portion cylindrique (2) de la cuve sur la hauteur de la portion conique (3) de ladite cuve est compris entre 3:1 et 1:3.

8. Dispositif selon l'une quelconque des revendications 1 à 7, **caractérisé en ce que** les outils (31) de la partie inférieure (69) de la cuve (1) s'étendent sur une moindre distance à partir de leur arbre (32) que ceux de la partie supérieure (2) de la cuve (1).

9. Dispositif selon l'une quelconque des revendications 1 à 8, **caractérisé en ce que** les outils (31) de la partie inférieure (69) de la cuve (1) sont conçus sous la forme de pales de mélange incurvées.

10. Dispositif selon l'une quelconque des revendications 1 à 9, **caractérisé en ce que** le haut de la cuve (1) est fermé de manière étanche par un capot (28) présentant une ouverture (27) d'admission de la matière, ouverture à laquelle est raccordée une chambre (18) apte à être fermée en partie haute et en partie basse par des vannes de fermeture étanches au vide (19, 20), notamment des vannes à tiroir (21, 22), et à laquelle est raccordé un conduit d'évacuation (61), un conduit d'évacuation supplémentaire (29) étant raccordé à la cuve (1).

11. Dispositif selon la revendication 10, **caractérisé en ce que** le capot (28) supporte le dispositif d'entraînement (34), notamment un dispositif d'entraînement réglable, et éventuellement également un mécanisme de transmission (35) pour les outils (30, 31).

12. Dispositif selon l'une quelconque des revendications 1 à 11, **caractérisé en ce que** les outils (31) agencés dans la partie inférieure (69) de la cuve (1) et les outils (30) associés à la partie supérieure (2) de la cuve (1) sont entraînés indépendamment les uns des autres par des arbres coaxiaux (32, 43).

13. Dispositif selon la revendication 12, **caractérisé en ce que** les outils (31) agencés dans la partie inférieure (69) de la cuve (1) tournent moins rapidement que les outils (30) associés à la partie supérieure (68) de la cuve (1).

14. Dispositif selon la revendication 12 ou la revendication 13, **caractérisé en ce que** les outils (30) agencés dans la partie supérieure (68) de la cuve (1) sont supportés par un arbre creux (43) agencé autour d'un arbre (32) supportant les outils (31) agencés dans la partie inférieure (69) de la cuve (1), les deux arbres (32, 43) étant entraînés par des dispositifs d'entraînement agencés à leur extrémité supérieure.

15. Dispositif selon la revendication 12 ou la revendication 13, **caractérisé en ce que** l'arbre (32) est entraîné par un dispositif agencé à son extrémité supérieure tandis que l'autre arbre (43) est entraîné par un dispositif d'entraînement agencé à son extrémité inférieure.

16. Dispositif selon l'une quelconque des revendications 1 à 15, **caractérisé en ce que** l'ouverture de sortie (4) de la cuve (1) est raccordée tangentiellement au bâti (6) de la vis sans fin (7).

17. Dispositif selon l'une quelconque des revendications 1 à 16, **caractérisé en ce qu'**il est prévu au moins une sonde de température (37, 38) dans la partie supérieure (68) de la cuve (1) et dans la partie inférieure (69) de la cuve (1).

18. Dispositif selon l'une quelconque des revendications 1 à 17, **caractérisé en ce que** la cuve (1) présente une enveloppe thermo-isolante (42).

19. Dispositif selon l'une quelconque des revendications 1 à 18, **caractérisé en ce que** l'enveloppe (42) de la cuve (1) comporte au moins une partie à double paroi, l'espace creux (52) entre les deux parois (50, 51) étant raccordé à un conduit (56) traversé par un agent de régulation de la température.

20. Dispositif selon l'une quelconque des revendications 1 à 19, **caractérisé en ce qu'**au moins un outil (30, 31) présente un espace creux (47) permettant d'introduire un agent de régulation de la température.

21. Dispositif selon l'une quelconque des revendications 1 à 20, **caractérisé en ce qu'**au moins un outil (30) produisant le tourbillon de mélange dans la partie supérieure (68) de la cuve (1) est conçu sous la forme d'un outil de broyage, de préférence avec des lames.

22. Dispositif selon l'une quelconque des revendications 1 à 21, **caractérisé en ce que** le volume utile de la cuve (1) correspond au moins à la moitié, de préférence à un à trois fois le débit par seconde de la vis sans fin (7).

23. Dispositif selon l'une des revendications 1 à 22, **caractérisé en ce que** les outils (30) associés à la partie supérieure (68) de la cuve (1) apportent à la matière plastique traitée une chaleur de mélange de 3 à 12 kWh pour un débit de 100 kg/h de la vis sans fin (7).

24. Procédé permettant de faire fonctionner un dispositif selon l'une quelconque des revendications 1 à 23, **caractérisé en ce que** l'énergie apportée à la matière contenue dans la cuve (1) est ajustée par réglage de la vitesse de rotation d'au moins un arbre supportant les outils (32 et/ou 43).

25. Procédé selon la revendication 24, **caractérisé en ce que** la vitesse de rotation de l'arbre (32, 43) est réglée en fonction de la température de matière plastique traitée mesurée dans la partie inférieure et/ou supérieure (3, 2) de la cuve (1).

26. Procédé selon la revendication 24 ou la revendication 25, **caractérisé en ce qu'**il est prévu une régulation de la température, éventuellement supplémentaire, de la matière plastique traitée par introduction d'un agent de régulation de la température dans au moins un des outils (30, 31).

27. Procédé selon l'une quelconque des revendications 24 à 26, **caractérisé en ce qu'**il est prévu une régulation de la température, éventuellement supplémentaire, de la matière plastique contenue dans la cuve (1) par introduction d'un agent de régulation de la température dans l'espace creux (52) d'au moins une portion à double paroi de l'enveloppe (42) de la cuve (1).
